# EUROPEAN PATENT APPLICATION

(11) **EP 4 560 784 A1**
(43) Date of publication of application: **28.05.2025**
(21) Application number: 22955942.2
(22) Date of filing: 22.08.2022
(51) Int. Cl.: H01M 10/613, H01M 50/103

(54) **BATTERY AND ELECTRIC DEVICE**

(71) Applicant: Contemporary Amperex Technology Co., Limited, Ningde, Fujian 352100 (CN)
(72) Inventor: HE, Runyong, Ningde, Fujian 352100 (CN); CHEN, Xingdi, Ningde, Fujian 352100 (CN); WANG, Peng, Ningde, Fujian 352100 (CN); QIN, Feng, Ningde, Fujian 352100 (CN)
(74) Representative: Gong, Jinping
(86) International application number: PCT/CN2022/113962
(87) International publication number: WO 2024/040392

(57) **Abstract**

The present application relates to a battery and an electrical apparatus. The battery comprises a battery cell, a top cover and a power distribution box, the top cover is sandwiched between the battery cell and the power distribution box, and the power distribution box is used to control the battery; a heat exchange flow channel is formed in the top cover, and the heat exchange flow channel is used to accommodate a fluid for regulating the temperature of the battery cell and the power distribution box. Since a heat exchange flow channel is formed in the top cover, and the heat exchange flow channel can accommodate the fluid for regulating the temperature of the battery cell and the temperature of the power distribution box. Therefore, the top cover not only has the function of protecting the battery cells, but also has the function of cooling or heating the battery cells and the power distribution box. At the same time, compared with traditional batteries, the power distribution box is located outside the box of the battery, which effectively improves the space utilization of the battery.

## Description

### TECHNICAL FIELD

The present application relates to the technical field of batteries, and in particular, to a battery and an electrical apparatus.

### BACKGROUND

With energy saving and emission reduction being the key to the sustainable development of the automobile industry, electric vehicles have become an important part of the sustainable development of automotive industry due to their advantages of energy saving and environmental protection. For the electric vehicles, the battery technology is another important factor related to their development.

However, the traditional top cover only plays the role of protecting the battery cell and has a single function.

### SUMMARY OF THE INVENTION

In view of the above problem, the present application provides a battery and an electrical apparatus, which can alleviate the problem of single function of the top cover.

In a first aspect, the present application provides a battery, wherein the battery comprises a battery cell, a top cover and a power distribution box, the top cover is sandwiched between the battery cell and the power distribution box, and the power distribution box is used to control the battery.

A heat exchange flow channel is formed in the top cover, and the heat exchange flow channel is used to accommodate a fluid to regulate the temperature of the battery cell and the power distribution box.

In above battery, since a heat exchange flow channel is formed in the top cover, and the heat exchange flow channel can accommodate a fluid for regulating the temperature of the battery cell and the temperature of the power distribution box. Therefore, the top cover not only has the function of protecting the battery cells, but also has the function of cooling or heating the battery cells and the power distribution box. At the same time, compared with traditional batteries, the power distribution box is located outside the box of the battery, which effectively improves the space utilization of the battery.

In some embodiments, the power distribution box is provided with one or more of a fuse, a relay, a current sensor and a BMS battery system inside to facilitate control of the battery.

In some embodiments, the power distribution box is a sealed structure. In this way, liquid can be prevented from entering the power distribution box and damaging the components in the power distribution box.

In some embodiments, the top cover comprises a first heat exchange component and a second heat exchange component, and the first heat exchange component and the second heat exchange component are spliced to form the heat exchange flow channel. In the above arrangement, the first heat exchange component and the second heat exchange component are spliced to form a heat exchange flow channel, which facilitates the formation of the heat exchange flow channel.

In some embodiments, the second heat exchange component is recessed away from the first heat exchange component to form the heat exchange flow channel, thereby facilitating the formation of the heat exchange flow channel.

In some embodiments, the first heat exchange component is a flat plate, the second heat exchange component includes a first heat exchange sub-component and a second heat exchange sub-component connected to each other, the first heat exchange sub-component is recessed relative to the second heat exchange sub-component in the direction away from the first heat exchange component; the heat exchange flow channel is formed between the first heat exchange sub-component and the first heat exchange component, and the second heat exchange sub-component is in contact with the first heat exchange component.

The battery cell is connected to a side of the first heat exchange component away from the second heat exchange component. In the above arrangement, the first heat exchange component is a flat plate, so as to facilitate connection with the battery cell. For example, the bottom or side wall (other than the terminal post surface) of the battery cell is adhered to the plane of the first heat exchange component away from the first heat exchange component. At the same time, since the second heat exchange component includes a first heat exchange sub-component and a second heat exchange sub-component which are connected to each other, and the first heat exchange sub-component is recessed relative to the second heat exchange sub-component in the direction away from the first heat exchange component, that is, the second heat exchange component has a concave-convex structure, the top cover has great impact resistance and provides good protection for the battery cells.

In some embodiments, the heat exchange flow channel comprises a plurality of sub-flow channels which communicate with each other.

The second heat exchange component comprises a plurality of first heat exchange sub-components and a plurality of second heat exchange sub-components, and one of the sub-flow channel is formed between each of the first heat exchange sub-components and the first heat exchange component.

In the above arrangement, since the heat exchange flow channel comprises a plurality of sub-flow channels, the fluid flows in the plurality of sub-flow channels to regulate the temperature uniformity of the battery cells and the components of the power distribution box. At the same time, since the heat exchange flow channel comprises a plurality of sub-flow channels, and correspondingly, the second heat exchange component comprises a plurality of first heat exchange sub-components and a plurality of second heat exchange sub-components, the number of concave-convex structures of the second heat exchange component is increased and the impact resistance of the top cover is further improved.

In some embodiments, the thickness of both the first heat exchange component and the second heat exchange component is 0.6 mm to 3 mm. The thickness of the first heat exchange component and the second heat exchange component is set to 0.6 mm to 3 mm, which provides a good heat exchange effect while ensuring the strength of both.

In some embodiments, in the thickness direction of the top cover, the depth of the flow channel area is 1 to 3 times the thickness of the first heat exchange component; and/or the depth of the heat exchange flow channel is 2 mm to 7 mm. In the above arrangement, the depth of the heat exchange flow channel ensures that the amount of fluid accommodated is appropriate, so that the amount of fluid accommodated is not too small, thereby ensuring the heat exchange effect while avoiding accommodating too much fluid and thus affecting the strength of the top cover.

In some embodiments, the first heat exchange component and the second heat exchange component are fixed by welding or bonding, thus ensuring the fixing effect of the first heat exchange component and the second heat exchange component.

In some embodiments, the material selected for the first heat exchange component is steel or aluminum; and/or the material selected for the second heat exchange component is steel or aluminum. In this way, the heat exchange effect between the first heat exchange component and the second heat exchange component is guaranteed.

In some embodiments, the battery further comprises a frame and a bottom cover, the two ends of the frame respectively form a top opening and a bottom opening, the top cover is mounted on the top of the frame to seal the top opening, the bottom cover is mounted on the bottom of the frame to seal the bottom opening, and the top cover, the frame and the bottom cover define an accommodating space.

The battery cell is accommodated in the accommodating space. In the above arrangement, the top cover and the bottom cover are respectively mounted on the top and bottom of the frame, so that the height of the entire box of the battery is relatively low, reducing the space occupied by the battery in the height direction.

In some embodiments, the frame includes a frame body and a support beam, the support beam is connected to the frame body, the frame body and the support beam together form the top opening, and the support beam is arranged below and supports the top cover. In the above arrangement, since the support beam is arranged below and supports the top cover, it has a good supporting effect on the top cover.

In a second aspect, the present application provides an electrical apparatus comprising the battery according to any of the above embodiments.

In some embodiments, the electrical apparatus is a vehicle, the top cover is a floor of the vehicle, and the side of the second heat exchange component away from the first heat exchange component is arranged to face the passenger compartment of the vehicle. In this way, the top cover can not only realize the function of heat exchange with the battery cells, but also heat or cool the passenger compartment to improve the user experience. Since the top cover serves as the floor of the vehicle, the utilization rate of the entire vehicle height is greatly improved, and a battery pack with better energy can be obtained. There is a heat exchange flow channel in the top cover. As the floor of the vehicle, the top cover can better isolate the noise generated by the vehicle underbody.

In some embodiments, the power distribution box is located directly below or behind the rear seats of the vehicle. Placing the power distribution box below or behind the rear seat of the vehicle can greatly utilize the space of the entire vehicle.

### BRIEF DESCRIPTION OF DRAWINGS

FIG. 1 is a schematic structural diagram of a vehicle according to some embodiments of the present application;
FIG. 2 is an exploded schematic structural diagram of a battery cell according to some embodiments of the present application;
FIG. 3 is an assembly diagram of a battery according to some embodiments of the present application;
FIG. 4 is an exploded schematic diagram of the battery shown in FIG. 3;
FIG. 5 is a section view of the battery shown in FIG. 3;
FIG. 6 is an exploded schematic diagram of the top cover of the battery shown in FIG. 3; and
FIG. 7 is a section view of the top cover shown in FIG. 6.

1000, vehicle; 100, battery; 200, controller; 300, motor; 10, top cover; 11, heat exchange flow channel; 12, first heat exchange component; 13, second heat exchange component; 131, first heat exchange sub-component; 132, second heat exchange sub-component; 20, battery cell; 21, end cover; 21a, electrode terminal; 22, shell; 23, battery cell assembly; 23a, tab; 30, frame; 31, frame body; 32, support beam; 40, bottom cover; 50, power distribution box; X, length direction; Y, width direction; Z, thickness direction.

### DETAILED DESCRIPTION

In order to make the aforementioned objectives, features and advantages of the present application more obvious and easy to understand, the specific implementations of the present application are described in detail below with reference to the attached drawings. In the following description, numerous specific details are set forth in order to provide a thorough understanding of the present application. However, the present application can be implemented in many other ways different from those described herein, and those skilled in the art can make similar improvements without violating the connotation of the present application. Therefore, the present application is not limited to the specific embodiments disclosed below.

In the description of the present application, it should be understood that the orientation or positional relationships indicated by the terms "central", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the drawings and are only for facilitating the description of the present application and simplifying the description, rather than indicating or implying that the apparatus or element referred to must have a particular orientation or be constructed and operated in a particular orientation, and therefore will not be interpreted as limiting the present application.

In addition, the terms "first" and "second" are used for descriptive purposes only, and cannot be construed as indicating or implying relative importance or implicitly indicating the number of technical features indicated. Therefore, a feature defined by "first" or "second" may expressly or implicitly include at least one of the features. In the description of the present application, the meaning of "a plurality of" is at least two, for example two or three, unless otherwise explicitly and specifically defined.

In the present application, unless otherwise expressly specified and limited, the terms "mount", "link", "connect" and "fix" should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or the interaction of two elements, unless otherwise specifically defined. For those of ordinary skill in the art, the specific meanings of the above terms in the present application can be understood according to specific situations.

In the present application, unless otherwise explicitly specified and defined, the expression a first feature being "on" or "under" a second feature may be the case that the first feature is in direct contact with the second feature, or the first feature is in indirect contact with the second feature via an intermediate medium. Furthermore, the expression the first feature being "over", "above" and "on top of" the second feature may be a case that the first feature is directly above or obliquely above the second feature, or only means that the level of the first feature is higher than that of the second feature. The expression the first feature being "below", "underneath" or "under" the second feature may be a case that the first feature is directly underneath or obliquely underneath the second feature, or only means that the level of the first feature is lower than that of the second feature.

It should be noted that when an element is referred to as "fixed to" or "arranged to" another element, it may be directly on the other element or there may be an intermediate element. When one element is considered to be "connected" to another element, it may be directly connected to another element or there may also be an intermediate element. The terms "vertical", "horizontal", "top", "bottom", "left", "right" and similar expressions used herein are for illustrative purposes only, and do not indicate that they are the only means of implementation.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. As the application fields of the power batteries continue to expand, their market demand is also constantly expanding.

The applicant noticed that the traditional top cover only plays the role of protecting the battery cell and has a single function.

In order to solve the problem of the single function of the traditional top cover, the applicant has found through research that the function of the top cover can be optimized, so that, for example, the top cover can not only protect the battery cells, but also cool or heat the battery cells.

Based on the above considerations, in order to solve the problem of the single function of the top cover, the applicant has designed a battery after in-depth research. The battery comprises a cell, a top cover and a power distribution box. The top cover is sandwiched between the battery cell and the power distribution box. The power distribution box is used to control the voltage of the battery. A heat exchange flow channel is formed in the top cover, and the heat exchange flow channel is used to accommodate a fluid for regulating the temperature of the battery cell and the power distribution box.

Since a heat exchange flow channel is formed in the top cover, and the heat exchange flow channel can accommodate the fluid for regulating the temperature of the battery cell and the temperature of the power distribution box. Therefore, the top cover not only has the function of protecting the battery cells, but also has the function of cooling or heating the battery cells and the power distribution box. At the same time, compared with traditional batteries, the power distribution box is located outside the battery box, which prevents the exhaust of the battery cells from damaging the components in the power distribution box.

The battery disclosed in the embodiment of the present application can be used in, but not limited to, electrical apparatus such as vehicles, vessels, or aircrafts. The power supply system of an electrical apparatus device can comprise the battery disclosed in the present application, so that the battery cell can be well protected and the heat management of the battery cell can be carried out.

An embodiment of the present application provides an electrical apparatus using a battery as a power source. The electrical apparatus may be, but is not limited to, a mobile phone, a tablet, a laptop, an electric toy, an electric tool, a battery cart, an electric vehicle, a ship, a spacecraft, and the like. Among them, the electric toy may include a stationary or mobile electric toy, for example, a game console, an electric car toy, an electric ship toy, and an electric aircraft toy, and the like, and the spacecraft may include an aircraft, a rocket, a space shuttle and a spaceship, and the like.

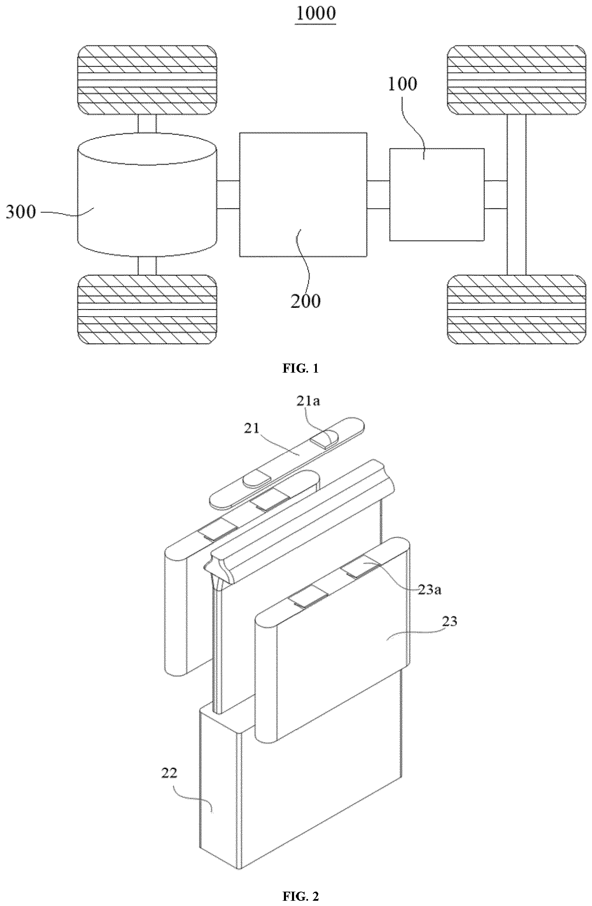

For the convenience of description in the following embodiments, referring to FIG. 1, an electrical apparatus being a vehicle 1000 according to an embodiment of the present application is taken as an example for the description.

The vehicle 1000 may be a fuel vehicle, a gas vehicle or a new energy vehicle. The new energy vehicle may be an all-electric vehicle, a hybrid vehicle, an extended range electric vehicle, or the like. A battery 100 is arranged in the vehicle 1000. The battery 100 may be arranged at the bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 may not only be used as the operating power source for the vehicle 1000, but also as a driving power source for the vehicle 1000, to replace or partially replace fuel or natural gas to provide driving power for the vehicle 1000.

The battery 100 includes a box and battery cells 20, the battery cells 20 are accommodated within the box. The box may include a first portion and a second portion that cover each other, and the first portion and the second portion jointly define an accommodating space for accommodating the battery cell 20. The second portion may be a hollow structure with one end open, and the first portion may be a plate-like structure. In this case, the first portion constitutes the top cover 10 of the battery 100.

In the battery 100, there may be a plurality of battery cells 20, and the plurality of battery cells 20 can be connected in series or in parallel or in parallel-series connection, where the parallel-series connection means that the plurality of battery cells 20 are connected in both series and parallel. The plurality of battery cells 20 can be directly connected together in series or in parallel or in parallel-series connection, and then the whole composed of the plurality of battery cells 20 can be accommodated in the box; and of course, the battery 100 may also be in the form of a battery 100 module first formed by the plurality of battery cells 20 being connected in series or in parallel or in parallel-series connection, then a plurality of battery 100 modules can be connected in series or in parallel or in parallel-series connection to form a whole, and accommodated in the box. The battery 100 may further comprise other structures, for example, the battery 100 may further include a bus component for realizing electrical connections between the plurality of battery cells 20.

Each battery cell 20 may be a secondary battery 100 or a primary battery 100; or it may be a lithium-sulfur battery 100, a sodium-ion battery 100 or a magnesium-ion battery 100, but is not limited thereto. The battery cells 20 may be cylindrical, flat, rectangular, or in other shapes.

The battery cell 20 is the smallest unit constituting the battery 100. Referring to FIG. 2, the battery cell 20 includes an end cover 21, a shell 22, a battery cell assembly 23 and other functional components.

The end cover 21 is a component that covers an opening of the shell 22 to isolate the internal environment of the battery cell 20 from the external environment. Without limitation, the shape of the end cover 21 may be adaptive to the shape of the shell 22 so as to be matched with the shell 22. Optionally, the end cover 21 may be made of a material (such as an aluminum alloy) with a certain hardness and strength, so that the end cover 21 is not easy to be deformed when being pressed and collided, the battery cell 20 can have a higher structural strength, and the safety performance can also be improved. Functional components such as electrode terminals 21a may be arranged on the end cover 21. The electrode terminals 21a can be used for being electrically connected to the battery cell assembly 23 for outputting or inputting electric energy of the battery cell 20. In some embodiments, the end cover 21 may be further provided with a pressure relief mechanism used for relieving internal pressure when the internal pressure or temperature of the battery cell 20 reaches a threshold. The end cover 21 may be made of various materials, such as copper, iron, aluminum, stainless steel, an aluminum alloy and plastic, which is not particularly limited in this embodiment of the present application. In some embodiments, an insulating member may be further arranged on an inner side of the end cover 21 and may be used for isolating an electrical connection component in the shell 22 from the end cover 21, thereby reducing the risk of short circuit. Exemplarily, the insulating member may be made of plastic, rubber, etc.

The shell 22 is an assembly used to be matched with the end cover 21 to form the internal environment of the battery cell 20, where the formed internal environment can be used to accommodate the battery cell assembly 23, an electrolyte and other components. The shell 22 and the end cover 21 may be separate components, the opening may be formed in the shell 22, and at the opening, the opening is covered with the end cover 21 so as to form the internal environment of the battery cell 20. Without limitation, the end cover 21 and the shell 22 may also be integrated. Specifically, the end cover 21 and the shell 22 may form a common connection surface before other components enter the shell. When an interior of the shell 22 is required to be encapsulated, the shell 22 is covered with the end cover 21. The shell 22 may be in various shapes and sizes, such as a rectangular solid, a cylinder and a hexagonal prism. Specifically, the shape of the shell 22 may be determined according to the specific shape and size of the battery cell assembly 23. The shell 22 may be made of various materials, such as copper, iron, aluminum, stainless steel, an aluminum alloy and plastic, which is not particularly limited in this embodiment of the present application.

The battery cell assembly 23 is a component in which an electrochemical reaction occurs in the battery cell 20. One or more battery cell assemblies 23 may be contained within the shell 22. The battery cell assembly 23 is mainly formed by winding or stacking a positive electrode plate and a negative electrode plate, and a separator is usually arranged between the positive electrode plate and the negative electrode plate. The portions, with active materials, of the positive electrode plate and the negative electrode plate constitute a main body part of the battery cell assembly 23, and the portions, without the active materials, of the positive electrode plate and the negative electrode plate respectively constitute tabs 23a. The positive tab and the negative tab may be located at one end of the main body part together or located at two ends of the main body part respectively. During charging and discharging of the battery 100, the positive electrode active material and the negative electrode active material react with the electrolyte solution, and the tabs 23a are connected to the electrode terminals 21a to form a current loop.

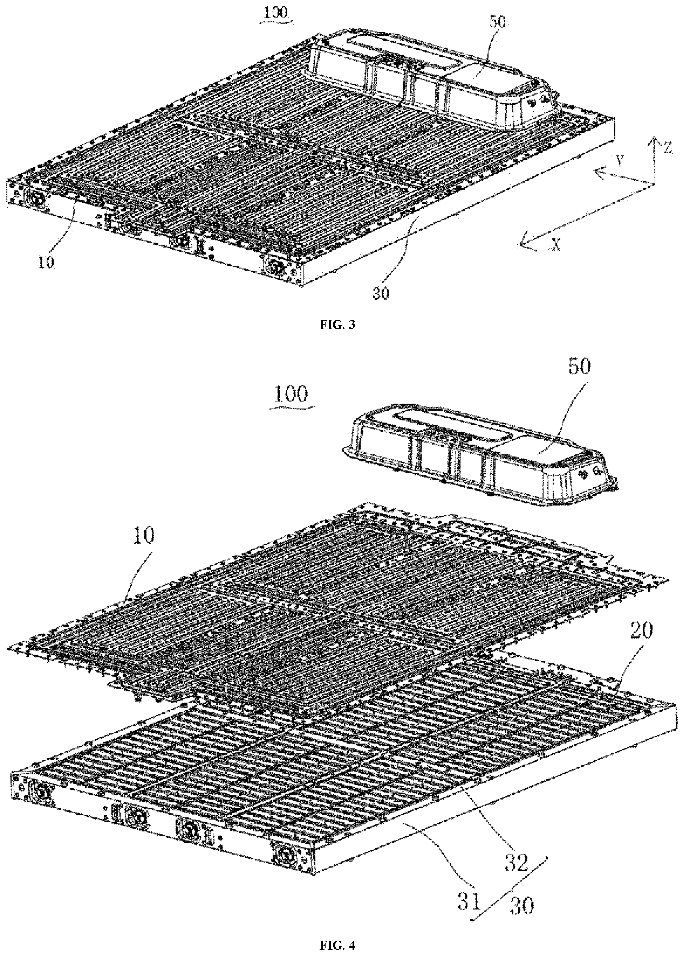

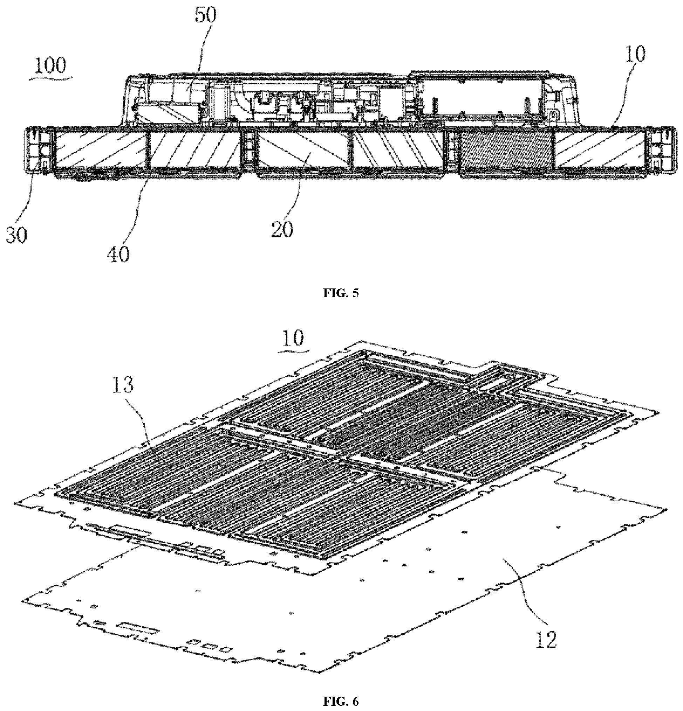

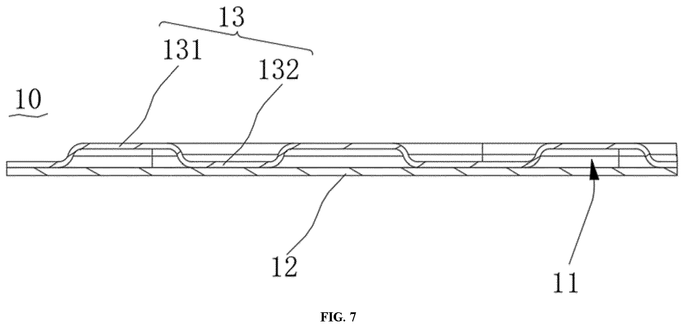

Referring to FIGS. 3 to 5, the present application provides a battery 100. The battery 100 includes a battery cell 20, a top cover 10 and a power distribution box 50. The top cover 10 is sandwiched between the battery cell 20 and the power distribution box 50. The power distribution box 50 is used to control the battery 100. Specifically, the power distribution box 50 is used to control the voltage and/or current of the battery 100. Referring to FIGS. 6 and 7, a heat exchange flow channel 11 is formed in the top cover 10, and the heat exchange flow channel 11 is used to accommodate a fluid to regulate the temperature of the battery cell 20 and the power distribution box 50.

"The top cover 10 is sandwiched between the battery cell 20 and the power distribution box 50 " means that the power distribution box 50, the top cover 10 and the battery cell 20 are stacked, and the top cover 10 is an interlayer between the power distribution box 50 and the battery cell 20 to form a sandwich structure. Specifically, in the height direction of the battery 100, the power distribution box 50, the top cover 10 and the battery cell 20 are stacked.

The heat exchange flow channel 11 is a passage that can accommodate a fluid for regulating the temperature of the battery cell 20 and the high-voltage box. In the process of cooling or heating the battery cell 20 and the power distribution box 50, the fluid can circulate in the heat exchange flow channel 11 to transfer or take away heat. The cross-section of the flow channel can be of various shapes, such as a cuboid, a cylinder, and a hexagonal prism.

Fluids can be either liquids or gases. When the top cover 10 is used to cool the battery cells 20 and the power distribution box 50, the liquid is also called a cooling medium. When the top cover 10 is used to heat the battery cells 20 and the power distribution box 50, the liquid is also called a heating medium.

In the above battery 100, since a heat exchange flow channel 11 is formed in the top cover 10, and the heat exchange flow channel 11 can accommodate a fluid for regulating the temperature of the battery cell 20 and the temperature of the power distribution box 50. Therefore, the top cover 10 not only has the function of protecting the battery cells 20, but also has the function of cooling or heating the battery cells 20 and the power distribution box 50. At the same time, compared with traditional batteries 100, the power distribution box 50 is located outside the box of the battery 100, which effectively improves the space utilization of the battery 100.

Generally, the voltage of the battery 100 is relatively high. If electrical apparatuses and electrical appliances such as the motor controller 200, the air conditioning system and the charging system are directly connected to the battery 100, the wiring harness of the battery 100 will be messy. Therefore, the battery 100 needs to add a high-voltage power distribution box 50 to distribute the high voltage to the battery 100. The power distribution box 50 adopts a centralized power distribution solution with a compact structure design, convenient wiring layout, and quick and easy maintenance. According to the system architecture requirements of different customers, the power distribution box 50 also needs to integrate some of the battery 100 management system intelligent control management units, so as to further simplify the complexity of power distribution of the entire electrical apparatus.

According to some embodiments of the present application, optionally, the power distribution box 50 is provided with one or more of a fuse, a relay, a current sensor and a BMS battery system inside to facilitate control of the battery 100. The fuse is a kind of electrical appliance that when a current flowing through the fuse exceeds a specified value, the fuse-element fuses with heat generated by itself, thereby disconnecting a circuit. The relay is an electrical control device, which is an electrical appliance that, when the change of input quantity (excitation quantity) reaches the specified requirement, causes a predetermined step change in the controlled quantity in the electrical output circuit. The current sensor is a detection apparatus that can sense the information of the measured current, convert the detected and sensed information into electrical signals or information in other desired forms conforming to certain standards and requirements according to a certain rule and output them, to meet the requirements for transmitting, processing, storing, displaying, recording, and controlling the information. The BMS battery system is commonly called battery nanny or battery housekeeper, mainly used to intelligently manage and maintain the battery units, prevent overcharging and over-discharging of batteries, extend the battery life, and monitor the battery state.

According to some embodiments of the present application, optionally, the power distribution box 50 is a sealed structure. In this way, liquid can be prevented from entering the power distribution box 50 and damaging the components in the power distribution box 50.

According to some embodiments of the present application, optionally, referring to FIG. 6 and FIG. 7, the top cover 10 includes a first heat exchange component 12 and a second heat exchange component 13, and the first heat exchange component 12 and the second heat exchange component 13 are connected to form a heat exchange flow channel 11.

The first heat exchange component 12 and the second heat exchange component 13 are both components that can exchange heat with external components, that is, the heat of the fluid can be transferred to the first heat exchange component 12 and the second heat exchange component 13, and the first heat exchange component 12 and the second heat exchange component 13 conduct the heat of the fluid to external components, such as the battery cell 20 and the components of the power distribution box 50. Generally, the first heat exchange component 12 and the second heat exchange component 13 are both made of metal.

In the above arrangement, the first heat exchange component 12 and the second heat exchange component 13 are connected to form the heat exchange flow channel 11, which facilitates the formation of the heat exchange flow channel 11.

It is conceivable that in other embodiments, the heat exchange flow channel 11 may also be formed in other ways, which is not limited here.

According to some embodiments of the present application, optionally, the second heat exchange component 13 is recessed away from the first heat exchange component 12 to form the heat exchange flow channel 11, so as to facilitate the formation of the heat exchange flow channel 11.

It is conceivable that in other embodiments, the specific formation method of the heat exchange flow channel 11 is not limited.

According to some embodiments of the present application, optionally, the first heat exchange component 12 is a flat plate, referring to FIG. 7, the second heat exchange component 13 includes a first heat exchange sub-component 131 and a second heat exchange sub-component 132 that are connected to each other, and the first heat exchange sub-component 131 is recessed relative to the second heat exchange sub-component 132 in the direction away from the first heat exchange component 12; a heat exchange flow channel 11 is formed between the first heat exchange sub-component 131 and the first heat exchange component 12, and the second heat exchange sub-component 132 is in contact with the first heat exchange component 12. The battery cell 20 abuts a side of the first heat exchange component 12 that is away from the second heat exchange component 13.

The first heat exchange component 12 is a flat plate. The first heat exchange sub-component 131 is recessed relative to the second heat exchange sub-component 132 in the direction away from the first heat exchange component 12, which means that the second heat exchange component 13 is a concave-convex plate with a concave-convex arrangement, that is, the second heat exchange component 13 is a mold cavity plate with a mold cavity, and the wall of the mold cavity and the first heat exchange component 12 define the heat exchange flow channel 11.

In the above arrangement, the first heat exchange component 12 is a flat plate, so as to facilitate connection with the battery cell 20. For example, the bottom or side wall (other than the terminal post surface) of the battery cell 20 is adhered to the plane of the first heat exchange component 12 away from the first heat exchange component 12. At the same time, since the second heat exchange component 13 includes a first heat exchange sub-component 131 and a second heat exchange sub-component 132 which are connected to each other, and the first heat exchange sub-component 131 is recessed relative to the second heat exchange sub-component 132 in the direction away from the first heat exchange component 12, that is, the second heat exchange component 13 has a concave-convex structure, the top cover 10 has great impact resistance and provides good protection for the battery cells 20.

Further, the heat exchange flow channel 11 comprises a plurality of sub-flow channels communicating with each other. The second heat exchange component 13 comprises a plurality of first heat exchange sub-components 131 and a plurality of second heat exchange sub-components 132, and one of the sub-flow channel is formed between each of the first heat exchange sub-components 131 and the first heat exchange component 12.

In the above arrangement, since the heat exchange flow channel 11 comprises a plurality of sub-flow channels, the fluid flows in the plurality of sub-flow channels to regulate the temperature uniformity of the battery cells 20 and the components of the power distribution box 50. At the same time, since the heat exchange flow channel 11 comprises a plurality of sub-flow channels, and correspondingly, the second heat exchange component 13 comprises a plurality of first heat exchange sub-components 131 and a plurality of second heat exchange sub-components 132, the number of concave-convex structures of the second heat exchange component 13 is increased and the impact resistance of the top cover 10 is further improved.

According to some embodiments of the present application, optionally, the thickness of both the first heat exchange component 12 and the second heat exchange component 13 is 0.6 millimeters (mm) to 3 millimeters (mm).

The thickness direction Z of the top cover 10 is the direction in which the first heat exchange component 12 and the second heat exchange component 13 cover each other, and the length direction X, width direction Y and thickness direction Z (see FIG. 3) of the top cover 10 are perpendicular to each other. The thickness of the first heat exchange component 12 is its dimension in the thickness direction Z of the top cover 10, and the thickness of the second heat exchange component 13 is its dimension in the thickness direction Z of the top cover 10.

The thickness of the first heat exchange component 12 and the second heat exchange component 13 is set to 0.6 mm to 3 mm, which has a good heat exchange effect while ensuring the strength of both.

It should be understood that, in other embodiments, the thickness of the first heat exchange component 12 and the second heat exchange component 13 is not limited and can be selected as needed. Meanwhile, the dimensions of the first heat exchange component 12 and the second heat exchange component 13 in the length direction X and the width direction Y of the top cover 10 are not limited.

According to some embodiments of the present application, optionally, in the thickness direction Z of the top cover 10, the depth of the heat exchange flow channel 11 is 1 to 3 times the thickness of the first heat exchange component 12; and/or the depth of the heat exchange flow channel 11 is 2 mm to 7 mm.

In the above arrangement, the depth of the heat exchange flow channel 11 ensures that the amount of fluid accommodated is appropriate, so that the amount of fluid accommodated is not too small, thereby ensuring the heat exchange effect, while avoiding accommodating too much fluid and thus affecting the strength of the top cover 10.

It should be understood that in other embodiments, the depth of the heat exchange flow channel 11 is not limited.

According to some embodiments of the present application, optionally, the first heat exchange component 12 and the second heat exchange component 13 are fixed by welding or bonding, thus ensuring the fixing effect of the first heat exchange component 12 and the second heat exchange component 13.

It is conceivable that in other embodiments, the first heat exchange component 12 and the second heat exchange component 13 may also be connected and fixed by screws, which is not limited here.

According to some embodiments of the present application, optionally, the material selected for the first heat exchange component 12 is steel or aluminum; and/or the material selected for the second heat exchange component 13 is steel or aluminum. In this way, the heat exchange effect between the first heat exchange component 12 and the second heat exchange component 13 is guaranteed.

Of course, in other embodiments, there is no limitation on the material of the first heat exchange component 12 and the second heat exchange component 13, as long as the heat exchange effect of the first heat exchange component 12 and the second heat exchange component 13 is guaranteed.

According to some embodiments of the present application, optionally, referring to FIGS. 3 to 5, the battery 100 also includes a frame 30 and a bottom cover 40, and the two ends of the frame 30 form a top opening and a bottom opening respectively. The top cover 10 is installed on the top of the frame 30 to seal the top opening, and the bottom cover 40 is installed on the bottom of the frame 30 to seal the bottom opening. The top cover 10, the frame 30 and the bottom cover 40 define an accommodating space. The battery cell 20 is accommodated in the accommodating space.

The frame 30 and the bottom cover 40 are both part of the second portion of the box. The frame 30 has a structure with a hollow interior and openings at both ends. The accommodating space is a closed space with a certain volume for accommodating the battery cell 20.

It should be noted that in the thickness direction Z of the top cover 10, that is, the height direction of the battery 100, the top opening and the bottom opening are respectively located at two ends of the frame 30.

In the above arrangement, the top cover 10 and the bottom cover 40 are respectively mounted on the top and bottom of the frame 30, so that the height of the entire box of the battery 100 is relatively low, reducing the space occupied by the battery 100 in the height direction.

According to some embodiments of the present application, optionally, the frame 30 has a hollow cuboid structure, that is, the frame 30 includes a first side portion, a second side portion, a third side portion, and a fourth side portion which are sequentially connected end to end. This facilitates the manufacture of the frame 30. It should be understood that in other embodiments, the shape of the frame 30 can be set as needed, such as the frame 30 can also be a hollow cylindrical structure.

According to some embodiments of the present application, optionally, the frame 30 includes a frame body 31 and a support beam 32, the support beam 32 is connected to the frame body 31, the frame body 31 and the support beam 32 together form a top opening, and the support beam 32 is arranged below and supports the top cover.

The frame body 31 is the main structure of the frame 30 , and the support beam 32 is the reinforcement structure of the frame 30. The support beam 32 includes a transverse beam and/or a longitudinal beam. In a specific implementation, the support beam 32 only includes a transverse beam. In another specific implementation, the support beam 32 only includes a longitudinal beam. In yet another specific implementation, the support beam 32 includes both a transverse beam and a longitudinal beam.

The transverse beam is a beam extending along the width direction Y, and the longitudinal beam is a beam extending along the length direction X.

In the above arrangement, since the support beam 32 is arranged below and supports the top cover, it has a good supporting effect on the top cover 10.

According to some embodiments of the present application, the present application further provides an electrical apparatus comprising the battery 100 described in any one of the above solutions, the battery 100 being used to provide electric energy to the electrical apparatus.

According to some embodiments of the present application, optionally, the electrical apparatus is a vehicle 1000, the top cover 10 is a floor of the vehicle 1000, and the side of the second heat exchange component 13 away from the first heat exchange component 12 is arranged to face the passenger compartment.

The floor is a footrest in the passenger compartment of the vehicle 1000 for passengers to step on. The side of the second heat exchange component 13 away from the first heat exchange component 12 is arranged to face the passenger compartment of the vehicle 1000.

In this way, the top cover 10 can not only realize the function of heat exchange with the battery cells 20, but also heat or cool the passenger compartment to improve the user experience. Since the top cover 10 serves as the floor of the vehicle 1000, the utilization rate of the entire vehicle height is greatly improved, and a battery 100 pack with better energy can be obtained. There is a heat exchange flow channel 11 in the top cover 10. As the floor of the vehicle 1000, the top cover can better isolate the noise generated by the vehicle underbody.

According to some embodiments of the present application, optionally, the power distribution box 50 is located directly below or behind the rear seats of the vehicle 1000.

Placing the power distribution box 50 below or behind the rear seat of the vehicle 1000 can greatly utilize the space of the entire vehicle.

It is conceivable that in other embodiments, the power distribution box 50 may also be disposed at other suitable locations, which is not limited here.

Referring to FIGS. 3 to 5, the present application provides a battery 100. The battery 100 includes a battery cell 20, a top cover 10 and a power distribution box 50. The top cover 10 is sandwiched between the battery cell 20 and the power distribution box 50. The power distribution box 50 is used to control the battery 100. Referring to FIGS. 6 and 7, a heat exchange flow channel 11 is formed in the top cover 10, and the heat exchange flow channel 11 is used to accommodate a fluid to regulate the temperature of the battery cell 20 and the power distribution box 50.

The battery 100 also includes a frame 30 and a bottom cover 40, and the two ends of the frame 30 form a top opening and a bottom opening respectively. The top cover 10 is installed on the top of the frame 30 to seal the top opening, and the bottom cover 40 is installed on the bottom of the frame 30 to seal the bottom opening. The top cover 10, the frame 30 and the bottom cover 40 define an accommodating space. The battery cell 20 is accommodated in the accommodating space.

The technical features of the above-mentioned embodiments can be combined arbitrarily. In order to make the description concise, not all possible combinations of the technical features in the above embodiments are described. However, all the combinations of the technical features should be considered as falling within the scope described in the specification provided that they do not conflict with each other.

The above embodiments only describe several implementations of the present application, and the description thereof is specific and detailed, but cannot therefore be understood as a limitation on the patent scope of the present application. It should be noted that those of ordinary skill in the art may further make variations and improvements without departing from the concept of the present application, all of which fall within the scope of protection of the present application. Therefore, the scope of protection of the present patent application shall be subject to the appended claims.

## Claims

1. A battery comprising a battery cell (20), a top cover (10) and a power distribution box (50), wherein the top cover (10) is sandwiched between the battery cell (20) and the power distribution box (50), and the power distribution box (50) is used to control the battery;
a heat exchange flow channel (11) is formed in the top cover (10), and the heat exchange flow channel (11) is used to accommodate a fluid to regulate the temperature of the battery cell (20) and the power distribution box (50).

2. The battery according to claim 1, wherein the power distribution box (50) is provided with one or more of a fuse, a relay, a current sensor and a BMS battery system inside.

3. The battery according to claim 1, wherein the power distribution box (50) is a sealed structure.

4. The battery according to claim 1, wherein the top cover (10) comprises a first heat exchange component (12) and a second heat exchange component (13), and the first heat exchange component (12) and the second heat exchange component (13) are connected to form the heat exchange flow channel (11).

5. The battery according to claim 4, wherein the second heat exchange component (13) is recessed away from the first heat exchange component (12) to form the heat exchange flow channel (11).

6. The battery according to claim 5, wherein the first heat exchange component (12) is a flat plate, the second heat exchange component (13) comprises a first heat exchange sub-component (131) and a second heat exchange sub-component (132) connected to each other, the first heat exchange sub-component (131) is recessed relative to the second heat exchange sub-component (132) in a direction away from the first heat exchange component (12); the heat exchange flow channel (11) is formed between the first heat exchange sub-component (131) and the first heat exchange component (12), and the second heat exchange sub-component (132) is in contact with the first heat exchange component (12);
the battery cell (20) is connected to a side of the first heat exchange component (12) away from the second heat exchange component (13).

7. The battery according to claim 6, wherein the heat exchange flow channel (11) comprises a plurality of sub-flow channels communicating with each other;
the second heat exchange component (13) comprises a plurality of first heat exchange sub-components (131) and a plurality of second heat exchange sub-components (132), and one of the sub-flow channels is formed between each of the first heat exchange sub-components (131) and the first heat exchange component (12).

8. The battery according to claim 4, wherein the thickness of both the first heat exchange component (12) and the second heat exchange component (13) is 0.6 mm to 3 mm.

9. The battery according to any one of claims 4 to 8, wherein in a thickness direction (Z) of the top cover (10), a depth of the heat exchange flow channel (11) is 1 to 3 times the thickness of the first heat exchange component (12); and/or
the depth of the heat exchange flow channel (11) is 2 mm to 7 mm.

10. The battery according to claim 4, wherein the first heat exchange component (12) and the second heat exchange component (13) are fixed by welding or bonding.

11. The battery according to claim 4, wherein the material selected for the first heat exchange component (12) is steel or aluminum; and/or the material selected for the second heat exchange component (13) is steel or aluminum.

12. The battery according to claim 1, wherein the battery further comprises a frame (30) and a bottom cover (40), the two ends of the frame (30) respectively form a top opening and a bottom opening, the top cover (10) is mounted on the top of the frame (30) to seal the top opening, the bottom cover (40) is mounted on the bottom of the frame (30) to seal the bottom opening, and the top cover (10), the frame (30) and the bottom cover (40) define an accommodating space;
the battery cell (20) is accommodated in the accommodating space.

13. The battery according to claim 12, wherein the frame (30) comprises a frame body (31) and a support beam (32), the support beam (32) is connected to the frame body (31), the frame body (31) and the support beam (32) together form the top opening, and the support beam (32) is arranged below and supports the top cover (10).

14. An electrical apparatus, comprising the battery according to any one of claims 1 to 13.

15. The electrical apparatus according to claim 14, wherein the electrical apparatus is a vehicle (1000), the top cover (10) is a floor of the vehicle (1000), and a side of the second heat exchange component (13) away from the first heat exchange component (12) is arranged to face the passenger compartment of the vehicle (1000).

16. The electrical apparatus according to claim 14, wherein the power distribution box (50) is located directly below or behind a rear seat of the vehicle (1000).
